# EUROPEAN PATENT SPECIFICATION

(11) **EP 0 419 428 B1**
(45) Date of publication and mention of the grant of the patent: **26.05.1993**
(21) Application number: 90850258.6
(22) Date of filing: 29.06.1990
(51) Int. Cl.: B23Q 11/10, B23B 51/06

(54) **Cutting tools such as drills, reamers, end mills and the like**
Schneidewerkzeuge wie Bohrer, Reibahlen, Schaftfräsen und dgl.
Outils de coupe tels que forets, alésoirs, fraises deux tailles et pareils

(30) Priority: 18.09.1989 SE 8903057
(43) Date of publication of application: 27.03.1991
(73) Proprietor: SKF Tools AB, S-30103 Halmstad (SE)
(72) Inventor: Melne, Carl-Bertil, S-30234 Halmstad (SE); Lensvall, Elve, S-30243 Halmstad (SE)
(74) Representative: Taquist, Lennart

(56) References cited:
- DE-A- 1 752 365
- DE-A- 3 617 540
- FR-A- 2 239 849

## Description

The present invention refers to cutting tools, such as drills, reamers, end mills, threading taps or the like, which comprise an elongated web part with cutting edges at one end, helical or straight grooves along the web part and a retainer or shaft at the other end.

Tools of the above stated type are well known and have been used since the start of technology. Numerous variants of such tools are present. The tools can be used for working of wood, metals or other materials of varying hardness. When a hard material is to be worked however, a large amount of heat develops at the cutting area. This makes it necessary to cool the cutting edge and the common procedure is in some way to supply oil to the cutting area. As known, oil, besides its cooling effect, has also the property of lubricating the cutting area and surrounding parts so that the friction is reduced.

To supply cutting fluid to the cutting part in a satisfactory way, however has always been a problem. A common method has been to arrange nozzles close to the tools through which nozzles cutting fluid is allowed to flow to the cutting area. The cutting fluid then usually follows the helical grooves which are provided in the web part and are necessary for material cut off to be removed from the working point. To provide nozzles close to for example a drill is in fact a simple thing, but the nozzles always occupy a certain space and often block the one who is going to work with the tool. The nozzles also must be directed in such a way that the cutting fluid flowing from these is conducted to the right area, which further complicates the use of the nozzles. They also block the detachment of cuttings.

Instead of using nozzles one may supply cutting fluid through special channels in the tool. One example on such a solution is shown in the european patent application 99344. According to this patent application, oil is supplied through a centrally bored hole in the shaft and is conducted further down to the cutting area through closed channels, which communicate with this hole and are provided on the outside, but recessed in the web part of the tool. This implies a complicated solution on the supply of cutting fluid and the cutting tool at manufacturing has to be subjected to several accurate working operations, which makes it expensive to manufacture.

By FR-A-2239849 is earlier known a tool holder for cutting tools having internal channels for supply of cutting fluid to grooves between the cutting edges. In one embodiment the tool to be used in the tool holder comprises an elongated web part with cutting edges at one end, helical or straight grooves along the web part and at the other end a retainer or shaft provided with external, longitudinal channels for lubrication and cooling fluid. These channels extend from the free end of the shaft and terminate at a distance from the grooves between the cutting edges, thereby supplying said grooves randomly with cutting fluid, resulting in an uneven, non-uniform and instable flow of cutting fluid, which could be hazardous for the uniform cooling of the cutting edges of the tool.

By the present invention the problems connected to the supply of cutting fluid according to the known principles have been solved and it has been achieved a cutting tool such as a drill, reamer, end mill or the like comprising an elongated web part with cutting edges at one end, helical or straight grooves along the web part and at the other end a retainer or shaft provided with external, longitudinal channels for lubrication and cooling fluid, which is characterized in that the channels extend from the free end of the shaft and end into the helical or straight grooves. By this provision it has been obtained in a simple and inexpensive way means ascertaining that cutting fluid is supplied to all cutting edges and to the cutting area in an even, uniform and stable manner.

According to the invention it is preferable for the channels to be helical, but also other designs of these might be considered.

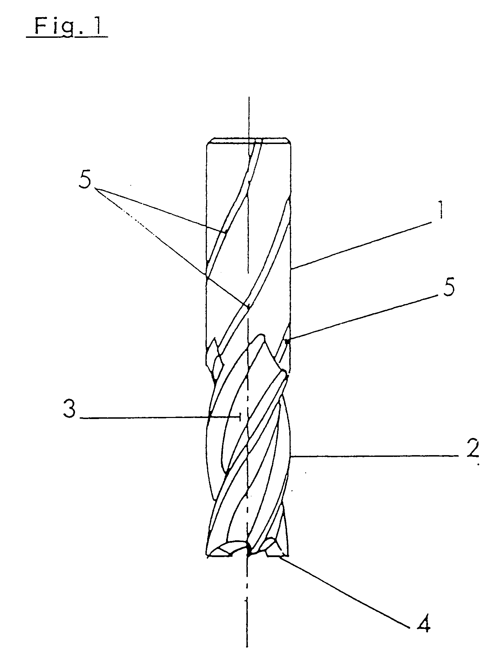

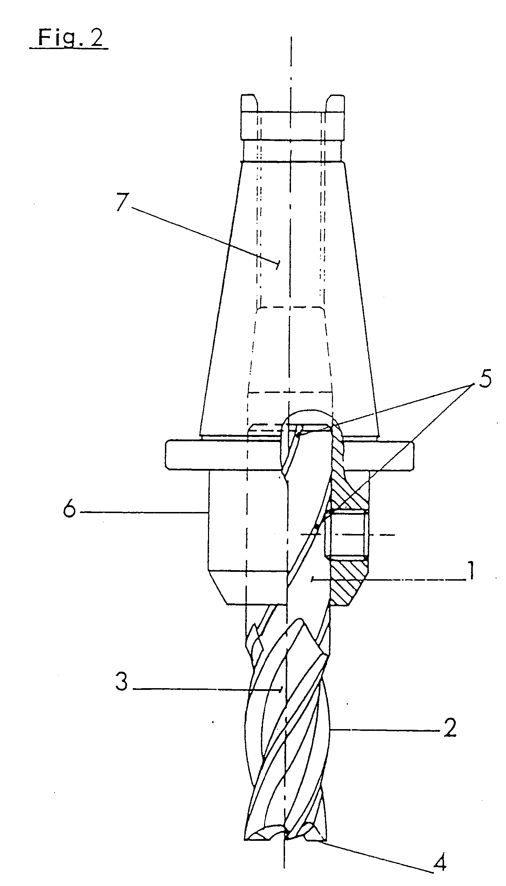

The invention will be described in greater detail in the following with reference to the appended drawing in which Fig. 1 shows an end mill according to the invention and where Fig. 2 shows an end mill according to Fig. 1 inserted in a tool retainer.

The end mill shown in Fig. 1 comprises a shaft 1, a web part 2 with helical grooves 3 and a cutting edge 4. On the outside of the shaft 1 there are according to the invention provided four channels 5 for the cutting fluid. These channels, which can be more or less in number, run out into the helical grooves 3, which ensures an even flow of cutting fluid down through the helical grooves 3 to the cutting edge 4. The shaft has not been provided with any central bore. Moreover, the shaft is conventional and with conventional measures. The provision of the channels 5 in the shaft is an extremely simple operation and the raise in costs at the manufacture of the tool with channels therefore will be small.

Fig. 2 shows a tool according to Fig. 1 with channels 5 in the shaft 1, inserted in a conventional tool retainer 6. To this tool retainer 6 is supplied cutting fluid through the opening 7 in a common way and from the opening 7 the cutting fluid runs into the channels 5 according to the invention and further down through the grooves 3 to the cutting area 4. By the modification of the shaft 1 according to the invention, thus an effective supply of cutting fluid has been obtained in a reliable way without changing the form of the tool and dimensions otherwise, which means that a tool according to the invention can replace a tool with central supply of cutting fluid.

By the present invention it thus has been provided a tool, which makes it superfluous to provide nozzles, which have to be directed and which block the chip transport.

The cutting fluid always enters the grooves of the tool and hits the cutting area and assists in blowing away the chips from there. Conventional tool retainers with central cutting fluid supply can be used. All these advantages can be achieved without any substantial increase of costs during manufacture of the tool.

The invention is not limited to the embodiment shown but can be varied in many ways within the scope of the claims.

## Claims

1. Cutting tools, such as drills, reamers, end mills or the like comprising an elongated web part (2) with cutting edges (4) at one end, helical or straight grooves (3) along the web part (2) and at the other end a retainer or shaft provided with external, longitudinal channels (5) for lubrication and cooling fluid,
**characterized therein,**
that the channels (5) extend from the free end of the shaft (1) and end into the helical or straight grooves (3).

2. Cutting tools, such as drills, reamers, end mills or the like according to claim 1,
**characterized therein,**
that the channels (5) are helical.

## Patentansprüche

1. Schneidwerkzeuge, wie z. B. Bohrer, Reibahlen, Stirnfräser u. dgl., welche einen länglichen gerippten Teil (2) mit Schneidkanten (4) an dem einen Ende, schraubenförmige oder gerade Nuten (3) längs des gerippten Teils (2) und einen Halter oder Schaft am anderen Ende aufweisen, der mit äußeren, sich in Längsrichtung erstreckenden Kanälen (5) für Schmier- und Kühlfluid versehen ist, **dadurch gekennzeichnet,** daß sich die Kanäle (5) vom freien Ende des Schafts (1) erstrecken und in die schraubenförmigen oder geraden Nuten (3) münden.

2. Schneidwerkzeuge, wie z. B. Bohrer, Reibahlen, Stirnfräser u. dgl. nach Anspruch 1, **dadurch gekennzeichnet,** daß die Kanäle (5) schraubenförmig sind.

## Revendications

1. Outils coupants tels que forets, alésoirs, fraises en bout ou outils similaires comprenant une âme allongée (2) avec arêtes de coupe (4) à une extrémité, des rainures hélicoïdales ou droites (3) le long de l'âme (2) et à l'autre extrémité un élément de fixation ou queue muni de canaux (5) extérieurs, longitudinaux pour la lubrification et le liquide de refroidissement
caractérisés en ce que les canaux (5) s'étendent depuis l'extrémité libre de la queue (1) et se terminent dans les rainures (3) hélicoïdales ou droites.

2. Outils coupants tels que forets, alésoirs, fraises en bout ou outils similaires selon revendication 1,
caractérisés en ce que les canaux (5) sont hélicoïdaux.
